# EUROPEAN PATENT APPLICATION

(11) **EP 4 414 125 A1**
(43) Date of publication of application: **14.08.2024**
(21) Application number: 24156245.3
(22) Date of filing: 07.02.2024
(51) Int. Cl.: B23Q 1/03, B23Q 1/62, B23Q 17/00, G05B 19/401, G05B 19/402

(54) **IMPROVED POSITIONING AND BLOCKING SYSTEM FOR POSITIONING AND BLOCKING PIECES WITH RESPECT TO A WORKING PLANE**

(30) Priority: 08.02.2023 IT 202300002145
(71) Applicant: SCM Group S.p.A., 47921 Rimini (RN) (IT)
(72) Inventor: VANNUCCI, Carlo, 47921 Rimini (IT); GESSI, Luca, 47921 Rimini (IT)
(74) Representative: Ferriero, Paolo

(57) **Abstract**

The present invention relates to an improved positioning and blocking system for positioning and blocking pieces with respect to a working plane.

Said positioning and blocking system comprises a positioning and blocking device (1) comprising a base (2), a body (3) rotatable on said base (2) about a rotation axis (A), and sensor means for determining a rotation angle between said body (3) and said base (2).

Said positioning and blocking system comprises storage means (SM) in which one or more reference angles are stored, each of which is associated with a machining of a piece, and a logic control unit (U) configured to:
o acquire, through said sensor means, said rotation angle,
o compare said rotation angle with a reference angle chosen on the basis of the machining to be performed on a piece,
o generate a signal based on the comparison between the rotation angle and the reference angle.

## Description

The present invention relates to an improved positioning and blocking system for positioning and blocking pieces with respect to a working plane.

In particular, the invention relates to the structure of a positioning and locking system comprising a positioning and locking device to be installed on a working plane for machining a piece, such as a panel, configured to correctly position said piece on the device itself (and consequently also with respect to the working plane) and block said piece for its machining.

More specifically, said positioning and locking device comprises a base and a body rotatable on said base according to the machining of the workpiece and is designed to indicate to an operator whether the body is rotated correctly.

Each machining of a piece requires the body to be rotated with respect to the base by a respective angle.

In other words, in order for the machining of a piece to be carried out correctly, before the machining is carried out, the body must be rotated on said base by a certain angle, based on the machining to be carried out, and said positioning and locking device is designed to offer the operator the possibility of easily checking whether the body is rotated by an angle corresponding to the angle associated with the machining to be carried out.

If the body is not rotated correctly, the operator can manually rotate the body with respect to the base until the angle between the body and the base is equal to the angle necessary for the machining to be carried out.

### Prior art

Currently, a center for machining pieces, such as panels, is provided with a working plane.

In general, such a working plane can be of two types.

A first type of working plane called "bar working plane" is supported by a basement and comprises a plurality of bars to support the workpieces, parallel to each other and movable along said basement.

One or more positioning and blocking devices can be positioned on each bar to position and block a panel to be machined.

Said working plane is mainly used for a through-machining (i.e. cutting the panel into parts or making through holes on the panel and then machining the edge of the panel).

A further type of working plane called "multifunction working plane" is supported by a basement and comprises fixing means for fixing the workpiece on said working plane.

Both the bar working plane and the multifunction working plane can comprise a plurality of abutment elements for the piece, so that the workpiece is positioned correctly with respect to the working plane.

Each abutment element is movable between a rest position, in which said abutment element is inside the working plane (i.e. in a lowered position with respect to the working plane), and an operational position, in which said abutment element protrudes from the working plane (i.e. in a raised position with respect to the working plane) in such a way that the panel contacts the abutment element.

Currently, a positioning and blocking device of a known type for positioning and blocking a workpiece on a working plane comprises a body and a base.

The body comprises a head for contacting a workpiece and the base is shaped to be positioned on a bar of said bar plane and configured to be blocked onto said bar.

Said positioning and blocking device of a known type can be provided with a reference scale indicating the rotation angles referring to the rotation of the body.

A disadvantage of said positioning and blocking device is given by the fact that, although said positioning and blocking device can be provided with a reference scale, said reference scale can be dirty or not easily readable.

Therefore, an operator who manually rotates the body with respect to the base is not able to know if the rotation of said body is correct with respect to the machining of the piece to be performed.

Consequently, a further disadvantage is given by the fact that an incorrect angle for machining the piece causes incorrect machining.

### Aim of the invention

The aim of the present invention is to overcome said disadvantages by providing a positioning and blocking system comprising a positioning and blocking device, wherein said positioning and blocking device comprises a body and a base and is configured to generate a signal to indicate whether the body is rotated correctly with respect to the base according to the machining of the piece.

A further aim of the present invention is to provide a positioning and blocking system comprising a positioning and blocking device preferably configured to indicate to an operator in which direction to rotate the body with respect to the base, when the body is not rotated correctly with respect to the base for machining of the piece.

### Object of the invention

It is the object of the invention a positioning and blocking system for positioning and blocking a piece with respect to a working plane of a machine tool, in which said positioning and blocking system comprises:
- a positioning and blocking device comprising:
   a base,
   a body rotatable on said base about a rotation axis,
   sensor means for determining a rotation angle between said body and said base,
- storage means in which the following data are stored:
   one or more reference angles, each of which is associated with a machining of a piece and indicates how much said body of said positioning and blocking device is to be rotated with respect to said base for said machining of said piece, and
- a logic control unit configured to:
   ∘ acquire, through said sensor means, said rotation angle,
   ∘ compare said rotation angle with a reference angle chosen on the basis of the machining to be performed on a piece,
   ∘ generate a signal based on the comparison between the rotation angle and the reference angle.

Further preferred embodiments of the positioning and blocking system are disclosed in the dependent claims.

Furthermore, it is object of the invention a machine tool comprising at least one positioning and blocking system mentioned above.

### Figure list

The present invention will be now described, for illustrative, but not limitative purposes, according to its embodiment, making particular reference to the enclosed figures, wherein:

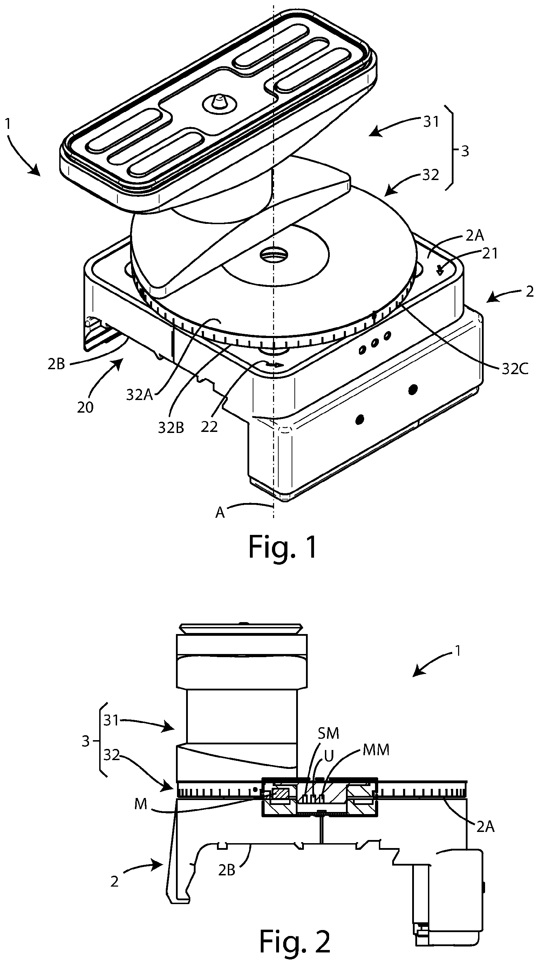

Figure 1 show a preferred embodiment of a positioning and blocking system comprising a positioning and blocking device for positioning and blocking a piece with respect to a working plane, according to the present invention, wherein said positioning and blocking device comprises a base and a body which is rotatable on said base around a rotation axis and comprises a head and an end portion couplable to said base, wherein said positioning and blocking device comprises a magnet, a magnetometer, as well as rotation indicator means for indicating if the rotation of the body with respect to the base is correct, wherein said rotation indicator means comprise a first light indicator and a second light indicator;
Figure 2 is a partially sectional side view of the positioning and blocking of Figure 1;
Figure 3 is an exploded view of the positioning and blocking system of Figure 1;
Figure 4 shows the positioning and blocking system of Figure 1, wherein the positioning and blocking device has a first light indicator turned on and a second light indicator turned off to indicate that the body is to be rotated in a first direction which is indicated by said first light indicator;
Figure 5 shows the positioning and blocking system of Figure 1, wherein the positioning and blocking device has a first light indicator turned off and a second light indicator turned on to indicate that the body is to be rotated in a second direction which is indicated by said second light indicator;
Figure 6 shows the positioning and blocking system of Figure 1, wherein the first light indicator and the second light indicator of the positioning and blocking device are turned on to indicate that the rotation of the body with respect to the base is correct;
Figure 7 shows a variant of the operating mode of the positioning and blocking device, wherein the first light indicator and the second light indicator of the positioning and blocking device are turned off to indicate that the rotation of the body with respect to the base is correct;
Figure 8 shows a variant of the first embodiment of the positioning and blocking system, wherein the rotation indicator means are arranged on the end portion of the body of said positioning and blocking device;
Figure 9 shows a second embodiment of the positioning and blocking system, wherein said positioning and blocking device comprises a magnet, a magnetometer arranged along the rotation axis of said body, as well as a gyroscopic sensor;
Figure 10 shows a third embodiment of the positioning and blocking system, wherein said positioning and blocking device comprises a magnet, a magnetometer arranged along the rotation axis of said body, as well as an accelerometer;
Figure 11 shows a fourth embodiment of the positioning and blocking system, wherein said positioning and blocking device comprises a magnet and a magnetometer arranged along an axis parallel and spaced from the rotation axis of the body;
Figure 12 shows a fifth embodiment of the positioning and blocking system, wherein said positioning and blocking device comprises a magnet, a magnetometer arranged along an axis parallel and spaced from the rotation axis, as well as a gyroscopic sensor;
Figure 13 shows a sixth embodiment of the positioning and blocking system, wherein said positioning and blocking device comprises a magnet, a magnetometer arranged along an axis parallel and spaced from the rotation axis of the body, as well as an accelerometer.

### Detailed description of the invention

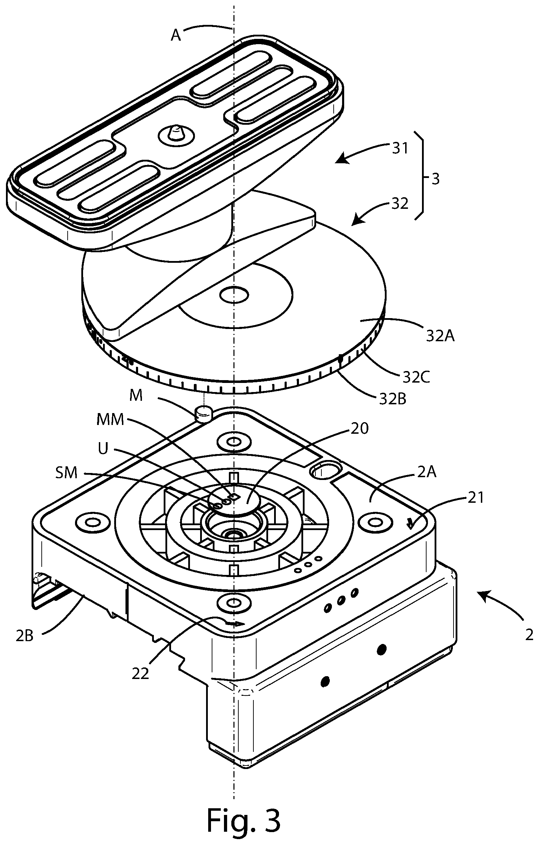

With particular reference to Figures 1 to 3, a first embodiment of a positioning and blocking system for positioning and blocking a piece on a working table is disclosed.

Said positioning and blocking system comprises a positioning and blocking device 1 for positioning and blocking a piece with respect to a working plane.

Said piece may be a wooden panel or a panel made of a material other than wood.

Said working plane is a bar plane and the positioning and blocking device is first positioned on a bar of said bar plane and blocked on said bar before the piece is subjected to machining.

Said positioning and blocking device 1 comprises a base 2 and a body 3 and said body 3 is rotatable on said base 2 around a rotation axis A.

In particular, said rotation axis A is perpendicular to said base 2.

More particularly, said rotation axis A passes through the center of said base 2.

Said body comprises a head 31 and an end portion 32.

The end portion 32 is integral with to the head 31.

The head 31 is intended to contact a portion of a workpiece.

The end portion 32 is couplable with said base 2.

Said end portion 32 can be coupled with said base 2 in a removable manner or detachable.

The end portion 32 is interposed between the head 31 and the base 2.

The end portion 32 is preferably provided with a reference scale indicating the rotation angles referred to the rotation of the body 2.

In particular, the end portion comprises a first surface 32A and a second surface 32B, opposite to said first surface 32A, as well as a side surface 32C.

The first surface 32A contact a portion of the head and the second surface 32B contacts a portion of the base 2.

The reference scale is arranged on the side surface 32C.

Advantageously, the presence of said reference scale facilitates an operator during the manual rotation of the body 3 with respect to the base 2 up to the desired position.

The base 2 comprises a first surface 2A which contacts the second surface 32B of the end portion 32 and a second surface 2B, opposite to the first surface 2A.

The second surface 2B of the base 2 is shaped to allow the base itself (and therefore the positioning and blocking device 1) to be positioned on a bar of a work surface.

Once the positioning and blocking device 1 is positioned and blocked on a bar of a working plane, the body 3 of the positioning and blocking device 1 is to be rotated with respect to the base 2 around the rotation axis A until said body 3 is in a correct position with respect to the base depending on the machining to which a piece (positioned and blocked by said positioning and blocking device) must be subjected.

In addition to the base 2 and the body 3, the positioning and blocking device 1 comprises sensor means for determining a rotation angle between said body 3 and said base 2.

Furthermore, the positioning and blocking system comprises:
- storage means SM (for example a memory) in which the following data are stored:
   one or more reference angles, each of which is associated with a machining of a piece, and
- a logic control unit U (for example a microprocessor) connected to said sensor means and to said storage means SM and configured to:
   ∘ acquire, through said sensor means, said rotation angle,
   ∘ compare said rotation angle with a reference angle chosen on the basis of the machining to be performed on a piece,
   ∘ generate a signal based on the comparison between the rotation angle and the reference angle.

With reference to said one or more reference angles, each angle indicates how much the body 3 of the positioning and blocking device 1 is to be rotated with respect to said base 2 according to the machining of the piece.

With reference to the signal generated by the logic control unit U, said signal can indicate that the body 3 is rotated with respect to the base 2 of a rotation angle different from the reference angle or that the body 3 is rotated with respect to the base 2 of a rotation angle equal to the reference angle.

In other words, the positioning and blocking system can be designed to generate a signal either when the body 3 is rotated with respect to the base 2 of a rotation angle which is not the desired angle for the machining to be carried out on the piece or when the body 3 is rotated with respect to the base 2 of a rotation angle which is the desired angle for the machining to be carried on the piece.

In particular, through said sensors, it is possible to determine an angle through at least through at least one physical quantity detected by said sensor means.

In other words, said sensor means are detecting means for detecting a physical quantity associated with a rotation angle.

More particularly, the following data can be stored in said storage means SM: a plurality of reference physical quantities, each of which is associated with a respective predetermined rotation angle (i.e. a predetermined rotation angle between body and base of a positioning and blocking device).

The logic control unit U is configured to:
∘ verify whether said physical quantity detected corresponds to a reference physical quantity,
∘ if the verification is successful, select a predetermined rotation angle,
∘ determine said rotation angle equal to said predetermined rotation angle.

In other words, it is possible to determine the rotation angle between the body 3 and the base 2 from the predetermined rotation angle stored in the storage means SM associated with the physical quantity detected by said sensor means.

In the first embodiment that is described, said positioning and blocking device comprises a magnet M for generating a magnetic field and said sensor means comprise a magnetometer MM for detecting at least one physical quantity associated with said magnetic field.

In particular, said at least one physical quantity is at least one physical quantity between an intensity of said magnetic field and/or a component of said intensity along a direction of said magnetic field.

The logic control unit U is configured to acquire a value of said intensity and/or a value of said component of said intensity and associate a rotation angle with said value of said intensity.

The magnet M and the magnetometer MM are arranged inside the positioning and blocking device 1 and spaced apart from each other.

In the first embodiment that is described, the magnetometer MM and the magnet M are positioned inside the base 2.

Furthermore, in the embodiment that is described, the magnetometer MM is arranged in said positioning and blocking device 1 along an axis B which coincides with the rotation axis A of the body 3.

In other words, the magnetometer MM is positioned inside the positioning and blocking device 1 along the rotation axis A of the body 3.

However, the magnetometer MM can be arranged in said positioning and blocking device 1 along an axis B parallel to the rotation axis A of the body 3 and spaced from said rotation axis A, without departing from the scope of the invention.

In the embodiment that is described, said magnetometer MM, said storage means SM and said logic control unit U are arranged on a supporting element 20.

In particular, said supporting element 20 is arranged inside said base 2.

More particularly, said base 2 is provided with a housing and said supporting element 20 is positioned in said housing.

Said housing is preferably positioned in the center of said base 2.

Furthermore, the positioning and blocking device 1 comprises rotation indicator means to indicate if the rotation of the body 3 with respect t the base 2 is correct for the machining to be performed on a piece.

Said rotation indicator means comprise:
- a first light indicator 21 having the shape of an arrow to indicate a first direction, and
- a second light indicator 22 having the shape of a second arrow to indicate a second direction, opposite to said first direction.

The logic control unit U is configured to send a first switch-on signal to said first light indicator 21 or a second switch-on signal to said second light indicator 22 to indicate to an operator the direction in which said body 3 is to be rotated with respect to said base 2.

In the first embodiment that is described, the first light indicator 21 and the second light indicator 22 are arranged on the base 2 of the positioning and blocking device 1.

In particular, the first light indicator 21 and the second light indicator 22 are arranged on the first surface 2A of the base.

However, the light indicator 21 and the second light indicator 22 can be arranged on the body 3, without departing from the scope of the invention.

In a variant not shown in Figures, said rotation indicator means comprise a single light indicator.

In particular, said light indicator can have the shape of a double arrow with a first end to indicate a first direction and a second end to indicate a second direction, opposite to said first direction.

Said light indicator can comprise a first light source at said first end and a second light source at said second end.

The logic control unit U can be configured to send a first switch-on signal to the first light source or a second switch-on signal to the second light source to indicate to an operator the direction in which said body 3 is to be rotated with respect to said base 2.

Said light indicator can be arranged on the base 2 or on the body 3 of the positioning and blocking device 1.

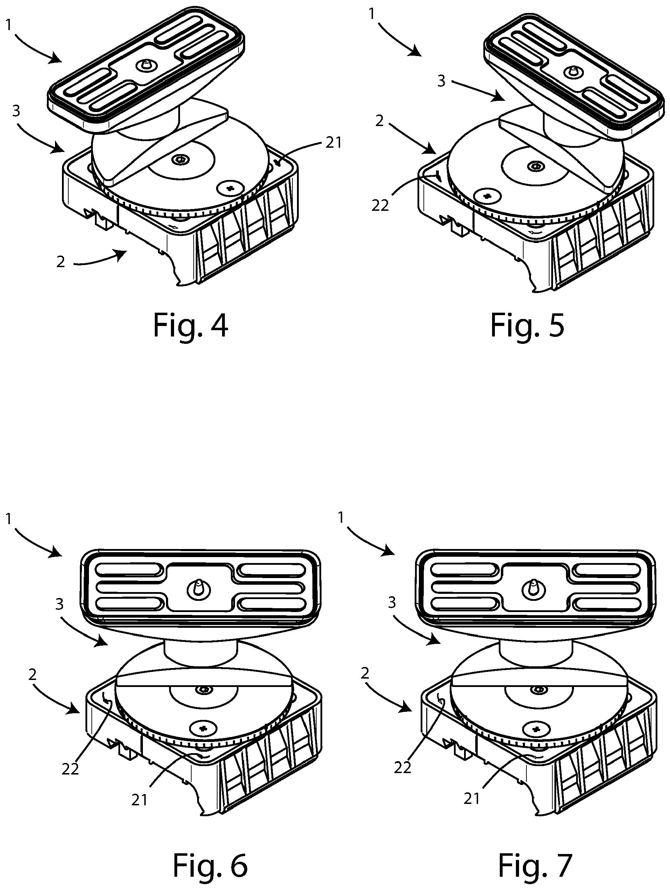

Figure 4 shows the positioning and blocking system, in which the positioning and blocking device 1 has the first indicator light 21 turned on.

This means that the body 3 of the positioning and blocking device 1 is to be rotated in the first direction to reach the correct position for machining a piece.

Figure 5 shows the positioning and blocking system, in which the positioning and blocking device 1 has the second light indicator 22 turned on.

This means that the body 3 of the positioning and blocking device 1 is to be rotated in the second direction to reach the correct position for machining the piece.

The positioning and blocking device 1 can be designed either to turn on both indicator lights when the angle of rotation between body 3 and base 2 is correct or to turn off both indicator lights when the angle of rotation between body 3 and base 2 is correct.

Figure 6 shows the positioning and blocking system, wherein the first light indicator 21 and the second light indicator 22 of the positioning and blocking device 1 are turned on.

This means that the body 3 of the positioning and blocking device is in the correct position for machining the piece.

Figure 7 shows the positioning and blocking system, wherein the first light indicator 21 and the second light indicator 22 of the positioning and blocking device 1 are turned off.

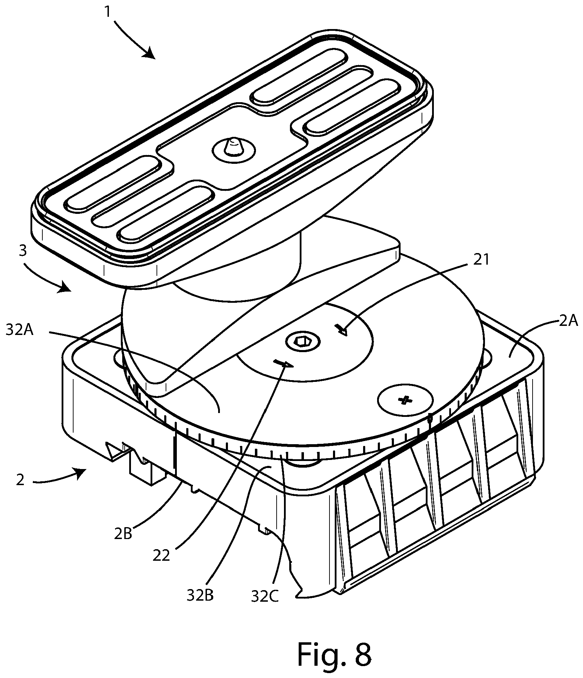

Figure 8 shows a variant of the positioning and blocking system 1.

In said variant, differently from the first embodiment described above, said rotation indicator means are arranged on the first surface 32A of the end portion 32 of the body 3 of the positioning and blocking device 1.

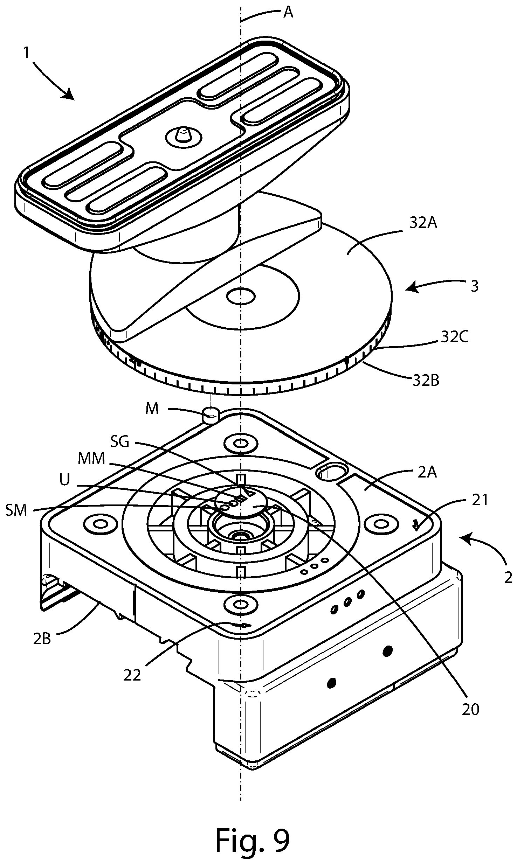

Figure 9 shows a second embodiment of the positioning and blocking system 1.

In the second embodiment, differently from the first embodiment, said positioning and blocking device comprise further sensor means for determining a relative rotation angle between said body 3 and said base 2.

Said further sensor means comprise a gyroscopic sensor SG for detecting an angular velocity of the body 3 with respect to said base 2.

The angular velocity is a variation of the rotation angle of the body 3 with respect to the base 2 per unit of time.

A relative rotation angle is obtained by calculating a time integral of the angular velocity.

The logic control unit U is configured to determine the rotation angle of the body 3 with respect to the base 2 by adding the rotation angle determined by said sensor means (i.e. the magnetometer MM) and said relative rotation angle.

In other words, the value of the rotation angle determined through the magnetometer MM is updated through the value of the relative rotation angle determined by means of the gyroscopic sensor SG.

Furthermore, the gyroscopic sensor SG is arranged on said supporting element 20.

Consequently, differently from the first embodiment, in the second embodiment, said magnetometer MM, said storage means SM, said logic control unit U and said gyroscopic sensor SG are arranged on said supporting element 20.

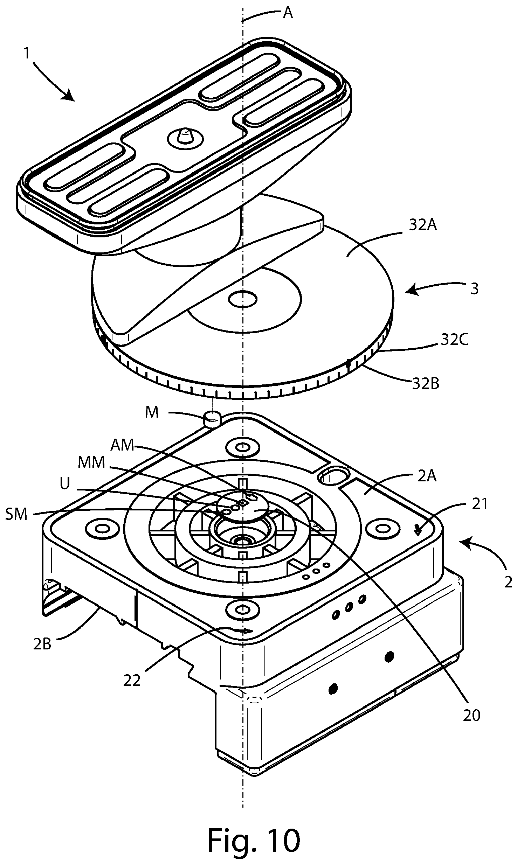

Figure 10 shows a third embodiment of the positioning and blocking system 1.

In the third embodiment, differently from the first embodiment, said positioning and blocking device 1 comprise further sensor means for determining a relative rotation angle between said body 3 and said base 3.

Said further sensor means comprise an accelerometer AM for detecting an acceleration of said body 3.

A relative rotation angle is obtained by calculating two integrals: a first integral over the time of the acceleration to obtain the angular velocity and a second integral over the time of the angular velocity to obtain said relative rotation angle.

The logic control unit U is configured to obtain the rotation angle of the body 3 with respect to the base 2 by adding the rotation angle determined by said sensor means (i.e. the magnetometer MM) and said relative rotation angle.

In other words, the value of the rotation angle determined by the magnetometer MM is updated through the value of the relative rotation angle determined by means of said AM accelerometer.

Furthermore, the accelerometer AM is arranged on said supporting element 20.

Consequently, differently from the first embodiment, in the third embodiment, said magnetometer MM, said storage means SM, said logic control unit U and said accelerometer AM are arranged on said supporting element 20.

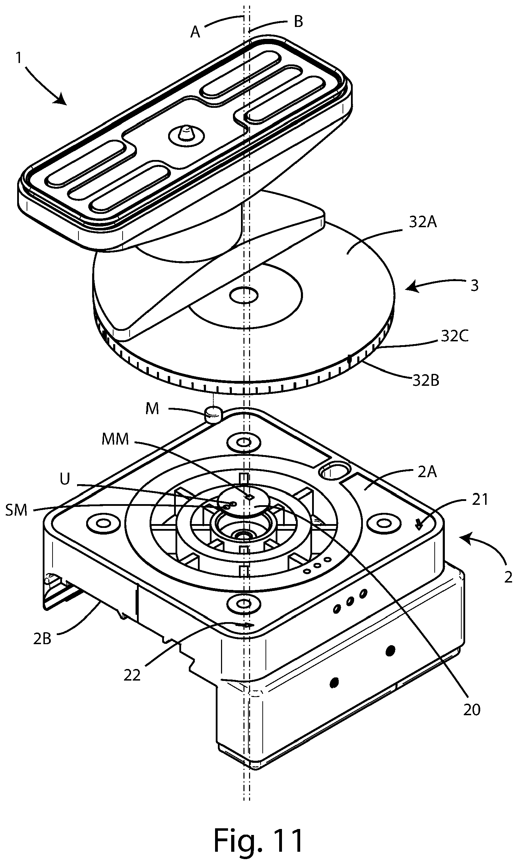

Figure 11 shows a fourth embodiment of the positioning and blocking system 1.

Differently from the first embodiment, in said fourth embodiment, the magnetometer MM is arranged in the positioning and blocking device 1 along an axis B parallel to the rotation axis A of the body 3 and spaced from said rotation axis A.

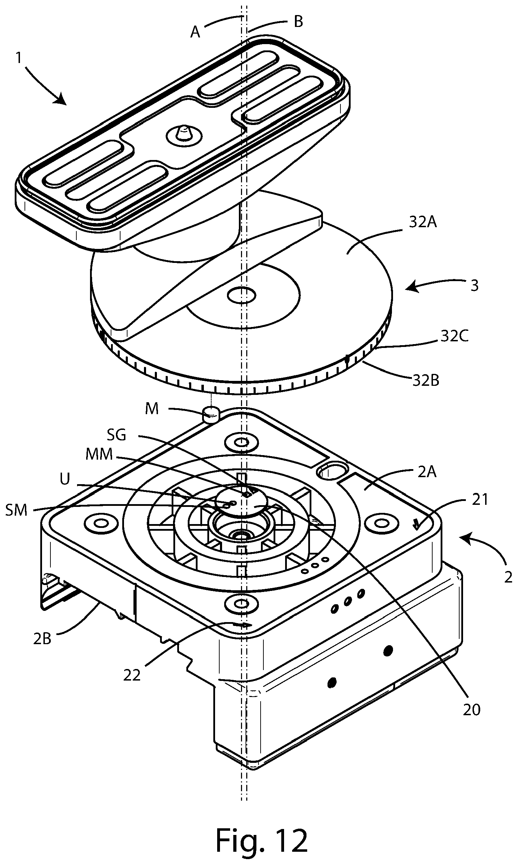

Figure 12 shows a fifth embodiment of the positioning and blocking system 1.

Differently from the fourth embodiment, said positioning and blocking device 1 comprise further sensor means, wherein said further sensor means comprise a gyroscopic sensor SG for detecting an angular velocity of the body 3 with respect to the base 2.

As already said for the second embodiment, the angular velocity is a variation of the angle of rotation of the body 3 with respect to the base 2 per unit of time, and the logic control unit U is configured to obtain the rotation angle of the body 3 with respect to the base 2 by adding the rotation angle determined by the magnetometer MM and the variation of the rotation angle.

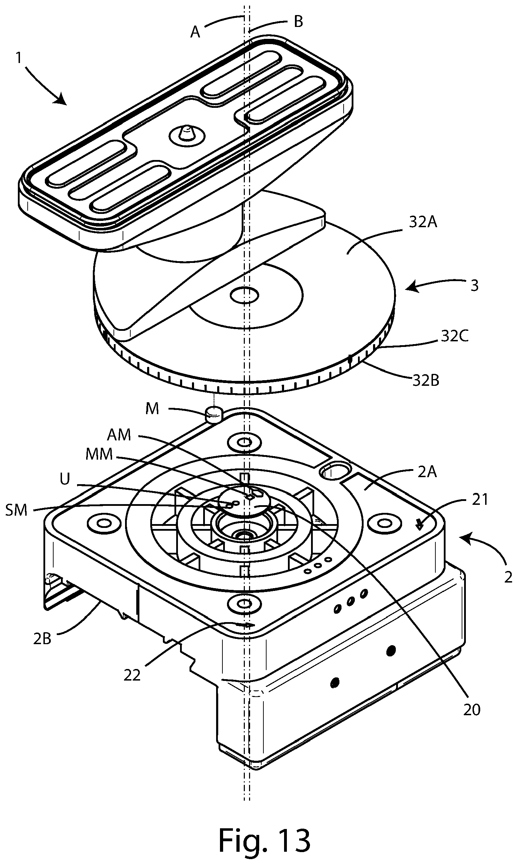

Figure 13 shows a sixth embodiment of the positioning and blocking system 1.

Differently from the fourth embodiment, said positioning and blocking device 1 comprises further sensor means, wherein said further sensor means comprise an accelerometer AM for detecting an acceleration of said body 3.

As already said for the third embodiment, it is possible to obtain a relative rotation angle by calculating two integrals: a first time integral of the acceleration to obtain the angular velocity and a second time integral of the angular velocity to obtain said relative rotation angle.

The logic control unit U is configured to obtain the rotation angle of the body 3 with respect to the base 2 by adding the rotation angle determined by the magnetometer MM and said relative rotation angle.

In a seventh embodiment not shown in Figures, said sensor means can comprise a potentiometer, and said at least one physical quantity comprises an electric potential difference.

The logic control unit U can be configured to acquire a value of said electric potential difference and associate a rotation angle with said value of said electric potential difference.

Said logic control unit U can be arranged externally to the potentiometer or internally to the potentiometer.

In an eighth embodiment not shown in Figures, said sensor means comprise an absolute optical encoder, and said at least one physical quantity comprises a light intensity (or quantity of light radiation).

The logic control unit U can be configured to acquire a value of said light intensity and associate a rotation angle with said value of said light intensity.

Said logic control unit U can be arranged externally to the absolute optical encoder or internally to the absolute optical encoder.

The absolute optical encoder converts an angular position of its rotation axis into a digital electrical signal.

The absolute optical encoder comprises a disk divided into sectors and on which there are holes or transparent areas that allow the passage of a light beam.

The disk is keyed onto a shaft of an organ to be controlled.

The absolute optical encoder also comprises at least one photoemitter to emit a light signal on the disc (which passes through said holes or said transparent areas) and at least one photodetector to receive said light signal and generate an output code.

In a ninth embodiment, not shown in Figures, said sensor means can be a capacitive encoder and said at least one physical quantity comprises a capacitance.

The logic control unit U can be configured to acquire a value of said capacitance and associate a rotation angle with said value of said capacitance.

In a tenth embodiment, not shown in Figures, said sensor means can comprise an inductive encoder and said at least one physical quantity comprises an inductance,

The logic control unit U can be configured to acquire a value of said inductance and associate a rotation angle with said value of said inductance.

In an eleventh embodiment, not shown in Figures, said sensor means can comprise a magnetic encoder and said at least one physical quantity comprises a magnetic field flux.

The logic control unit U can be configured to acquire a value of said magnetic field flux and associate a rotation angle with said value of said magnetic flux.

In a twelfth embodiment, not shown in Figures, said positioning and blocking device 1 can comprise a shaft which connects the body 3 to the base 2 and a gear wheel keyed onto said shaft.

The gear wheel is provide with a plurality of teeth and each tooth extends from a lateral surface of said gear wheel outwards and comprises a first end arranged on said lateral surface and a second end protruding with respect to said lateral surface.

In particular, the teeth of said plurality of teeth have the same height.

In said twelfth embodiment, said positioning and blocking device 1 can comprise further sensor means for determining a relative rotation angle between said body 3 and said base 2.

Said further sensor means can comprise a proximity sensor for determining a respective angle during the rotation of said gear wheel whenever a tooth of said plurality of teeth falls into a field of view of said proximity sensor.

In other words, the proximity sensor detects the transit of a tooth of said plurality of teeth through different heights respectively associated with the first end and the second end of said tooth.

The first end corresponds to the side surface of the gear wheel, while the second end corresponds to a head surface of the tooth.

The distance detected by the proximity sensor at the second end of the tooth is smaller than the distance detected by the proximity sensor at the first end.

Alternatively, the proximity sensor can be configured to detect when a height is greater or less than a predetermined threshold.

Furthermore, the logic control unit U is configured to:
∘ determine said relative rotation angle by adding each angle determined through said proximity sensor, and
∘ determine said rotation angle between said body 3 and said base 2 by adding the rotation angle determined through said sensor means and said relative rotation angle.

In a thirteenth embodiment, not shown in the Figures, said positioning and blocking device 1 can comprise a shaft (not shown) which connects the body 3 to the base 2 through a shaft and a gear wheel keyed onto said shaft.

The gear wheel is provided with a plurality of teeth and each tooth extends from a lateral surface of said gear wheel outwards and comprise a first end arranged on said lateral surface and a second end protruding with respect to said lateral surface.

In particular, the teeth of said plurality of teeth have different heights.

In other words, each tooth has a respective height and the gear wheel does not have teeth with the same height.

In said thirteenth embodiment, said sensor means can comprise an inductive proximity sensor and said at least one physical quantity is the reluctance.

The value of the reluctance depends on the distance between the proximity sensor and the second end of each tooth of the gear wheel or on the difference of distances between the distance between the proximity sensor and the first end of the tooth and the distance between the proximity sensor and the second end of said tooth.

The logic control unit U can be configured to acquire a value of said reluctance and associate a rotation angle with said value of said reluctance.

With reference to the twelfth and thirteenth embodiment, the proximity sensor may be an inductive proximity sensor or a capacitive proximity sensor or an optical sensor or an ultrasonic sensor.

Consequently, the physical quantity detected by the proximity sensor can be different depending on the type of proximity sensor.

For each of the embodiments described above, although not shown, said positioning and blocking device 1 can comprise a signaling module.

Said signaling module can comprise at least one device between an acoustic device, a light device and a haptic device, and said logic control unit U is configured to send an activation signal to said signaling module.

Furthermore, for each of the embodiments described above, said positioning and blocking device 1 can comprise moving means to rotate said body 3 with respect to said base 2.

For example, said moving means comprise an electric motor.

The logic control unit U is connected to said moving means and configured to send a control signal to said moving means to rotate said body 3 with respect to said base 2.

Advantageously, the rotation of the body 3 with respect to the base 2 can be motorized and controlled by the logic control unit U.

Furthermore, for each of the embodiments described above, said storage means SM and said logic control unit U are included in said positioning and blocking device 1.

In particular, as mentioned above, said logic control unit U and said storage means SM are arranged on a supporting element 20.

However, said logic control unit U and/or said storage means SM can be external to said positioning and blocking device 1.

In other words, it is not necessary that said logic control unit U and/or said storage means SM are included in said positioning and blocking device 1.

For example said logic control unit U and/or said storage means SM can be included in a machine tool.

However, when said storage means SM are included in said positioning and blocking device 1, the logic control unit U (which may or may not be included in the positioning and blocking device 1) can be configured to modify at least one value associated with one or more reference angles and to store said modified value.

In other words, an operator can update through the logic control unit U the value of a reference angle stored in said storage means SM.

Often, a positioning and blocking device 1 can be identified by the logic control unit U through a reference angle (corresponding to the rotation angle of the body 3 of said positioning device 1 with respect to the base 2), stored in the storage means SM and associated with said positioning and locking device 1.

However, when a positioning and blocking device 1 is positioned on a working plane of a machine tool, the body 3 of said positioning and blocking device 1 can be rotated with respect to the base 2 for machining a piece, whereby the machining requires a rotation angle different from the reference angle associated with said positioning and blocking device 1.

For this reason, it is preferable that the value of the reference angle is updated and said updated value corresponds to the value of the rotation angle between the body 3 and the base 2 for the machining carried on said piece.

An operator can then update the value of the reference angle to said rotation angle and store said updated value in said storage means SM through the logic control unit U.

The present invention relates also to machine tool comprising at least one positioning and blocking device 1 mentioned above.

### Advantages

Advantageously, through the positioning and blocking system object of the invention, an operator can understand if the body 3 of a positioning and blocking device is rotated with respect to the base 2 by a rotation angle which is appropriate to the machining to which a piece must be subjected.

A further advantage is given by the fact that said positioning and blocking device 1 is adapted to indicate the direction in which the body 3 is to be rotated with respect to the base 2, when the rotation angle is not appropriate for the machining to which a piece must be subjected.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Positioning and blocking system for positioning and blocking a piece with respect to a working plane of a tool machine, comprising:
- a positioning and blocking device (1) comprising:
a base (2),
a body (3) rotatable on said base (2) about a rotation axis (A),
sensor means for determining a rotation angle between said body (3) and said base (2),
- storage means (SM) in which the following data are stored:
one or more reference angles, each of which is associated with a machining of a piece and indicates how much said body (3) of said positioning and blocking device (1) is to be rotated with respect to said base (2) for said machining of said piece, and
- a logic control unit (U) configured to:
∘ acquire, through said sensor means, said rotation angle,
∘ compare said rotation angle with a reference angle chosen on the basis of the machining to be performed on a piece,
∘ generate a signal based on the comparison between the rotation angle and the reference angle.

2. Positioning and blocking system according to claim 1, wherein said signal indicates that said body (3) is rotated with respect to said base (2) of a rotation angle different from said reference angle.

3. Positioning and blocking system according to claim 1, wherein said signal indicates that said body (3) is rotated with respect to said base (2) of a rotation angle equal to said reference angle.

4. Positioning and blocking system according to any one of previous claims, wherein
said positioning and blocking device (1) comprises a magnet (M) for generating a magnetic field, and
wherein
said sensor means comprise a magnetometer (MM) for detecting at least one physical quantity associated with said magnetic field.

5. Positioning and blocking system according to the previous claim, wherein said at least one physical quantity is at least one physical quantity between an intensity of said magnetic field and/or a component of said intensity along a direction of said magnetic field.

6. Positioning and blocking system according to claim 4 or 5, wherein said positioning and blocking device (1) comprises further sensor means (SG, AM) for determining a relative rotation angle between said body (3) and said base (2), wherein said further sensor means (SG, AM) comprise a gyroscopic sensor (SG) for detecting an angular velocity of said body (3) with respect to said base (2), and
wherein
said logic control unit (U) is configured to determine said rotation angle between said body (3) and said base (2) by adding the rotation angle determined by said sensor means and said relative rotation angle.

7. Positioning and blocking system according to claim 4 or 5, wherein said positioning and blocking device (1) comprises further sensor means (SG, AM) for determining a relative rotation angle between said body (3) and said base (2), wherein said further sensor means (SG, AM) comprise an accelerometer (AM) for detecting an acceleration of said body (3), and
wherein
said logic control unit (U) is configured to determine said rotation angle between said body (3) and said base (2) by adding the rotation angle determined by said sensor means and said relative rotation angle.

8. Positioning and blocking system according to claim 4 or 5, wherein
wherein
said positioning and blocking device (1) comprises a shaft connecting said body (3) to said base (2), and a gear wheel keyed onto said shaft, wherein said gear wheel comprises a plurality of teeth, and
wherein
said positioning and blocking device (1) comprises further sensor means for determining a relative rotation angle between said body (3) and said base (2), wherein said further sensor means comprise a proximity sensor for determining a respective angle during rotation of said gear wheel whenever a tooth falls into a field of view of said proximity sensor,
wherein
said logic control unit (U) is configured to:
∘ determine said relative rotation angle by adding each angle determined through said proximity sensor, and
∘ determine said rotation angle between said body (3) and said base (2) by adding the rotation angle determined through said sensor means and said relative rotation angle.

9. Positioning and blocking system (1) according to any one of the previous claims, wherein
said magnetometer (MM) is arranged in said positioning and blocking device (1) along an axis (B) coinciding with said rotation axis (A) of said body (3), or
said magnetometer (MM) is arranged in said positioning and blocking device (1) along an axis (B) parallel to said rotation axis (A) of said body (3) and spaced from said rotation axis (A).

10. Positioning and blocking system (1) according to any one of claims 1-3, wherein said sensor means comprise a potentiometer, and said at least one physical quantity comprises an electric potential difference.

11. Positioning and blocking system (1) according to any one of claims 1-3, wherein said sensor means comprise an absolute optical encoder, and said at least one physical quantity comprises a luminous intensity.

12. Positioning and blocking system (1) according to any one of claims 1-3, wherein said sensor means comprise:
a capacitive encoder and said at least one physical quantity comprises a capacitance, or
an inductive encoder and said at least one physical quantity comprises an inductance, or
a magnetic encoder and said at least one physical quantity comprises a magnetic field flux.

13. Positioning and blocking system (1) according to any one of the previous claims, wherein said positioning and blocking device (1) comprises a signaling module, in which said signaling module comprises at least one device between an acoustic device, a light device and a haptic device, and wherein said logic control unit (U) is configured to send an activation signal to said signaling module.

14. Positioning and blocking system according to any one of claims 1-13, wherein
wherein said positioning and blocking device (1) comprises:
- a first light indicator (21) having the shape of an arrow to indicate a first direction, and
- a second light indicator (22) having the shape of a second arrow to indicate a second direction, opposite to said first direction, and
wherein
said logic control unit (U) is configured to send a first switch-on signal to said first light indicator (21) or a second switch-on signal to said second light indicator (22) to indicate to an operator the direction in which said body (3) is to be rotated with respect to said base (2),
wherein
said first light indicator (21) and said second light indicator (22) are arranged on said base (2) or on said body (3).

15. Positioning and blocking system according to any one of claims 1-13, wherein
said positioning and blocking device (1) comprises a light indicator having the shape of a double arrow with a first end for indicating a first direction and a second end for indicating a second direction, opposite to said first direction, said light indicator comprising a first light source at said first end and a second light source at said second end, and
wherein
said logic control unit (U) is configured to send a first switch-on signal to said first light source or a second switch-on signal to said second light source to indicate to an operator the direction in which said body (3) is to be rotated with respect to said base (2),
wherein
said light indicator is arranged on said base (2) or on said body (3).

16. Positioning and blocking system according to any one of the previous claims, wherein
said positioning and blocking device (1) comprises moving means for rotating said body (3) with respect to said base (2), and
wherein
said logic control unit (U) is connected to said moving means and configured to send a control signal to said moving means for rotating said body (3) with respect to said base (2).

17. Positioning and blocking system according to any one of the previous claims, wherein said logic control unit (U) is arranged in said positioning and blocking device (1).

18. Positioning and blocking system according to any one of the previous claims, wherein said storage means (SM) are arranged in said positioning and blocking device (1).

19. Tool machine comprising at least one positioning and blocking system according to any one of the previous claims.
